# FASCICULE DE BREVET EUROPEEN

(11) **EP 1 295 676 B1**
(45) Date de publication et mention de la délivrance du brevet: **20.04.2011**
(21) Numéro de dépôt: 02292334.6
(22) Date de dépôt: 23.09.2002
(51) Int. Cl.: B23Q 5/32, B23Q 5/06, B23B 49/00, B23B 45/04

(54) **Machine pneumatique d'usinage à arrêt automatique à l'issue d'un cycle d'usinage**
Pneumatisches Werkzeug mit selbsttätiger Abschaltung am Ende des Bearbeitungszyklus
Pneumatic tool with automatic shut-off at the end of a machining cycle

(30) Priorité: 25.09.2001 FR 0112336
(43) Date de publication de la demande: 26.03.2003
(73) Titulaire: Cooper Power Tools SAS, 77330 Ozoir la Ferrière (FR)
(72) Inventeur: Bureller, Michel, 92160 Antony (FR); Pereira Santo, Sébastien, 94130 Nogent sur Marne (FR)
(74) Mandataire: Domenego, Bertrand

(56) Documents cités:
- EP-A- 1 129 827
- GB-A- 1 554 169
- US-A- 2 988 935
- US-A- 4 612 998
- US-A- 4 619 435
- US-A- 5 205 540
- US-A- 5 351 797

## Description

La présente invention concerne une machine d'usinage du type comprenant :
- un moteur pneumatique,
- un circuit pneumatique de raccordement du moteur à une source d'air comprimé, ce circuit pneumatique comprenant une vanne d'alimentation du moteur,
- une broche porte-outils,
- un mécanisme d'entraînement reliant mécaniquement le moteur à la broche pour l'entraîner, le mécanisme comprenant un organe de sélection mobile entre une première position de sélection d'un premier mode d'entraînement de la broche, et une deuxième position de sélection d'un deuxième mode d'entraînement de la broche différent du premier mode d'entraînement, et
- un dispositif de commande du fonctionnement de la machine pour commander l'exécution d'un cycle d'entraînement comprenant au moins une étape d'entraînement de la broche selon le premier mode d'entraînement, puis une étape d'entraînement de la broche selon le deuxième mode d'entraînement, puis commander l'arrêt de l'alimentation en air du moteur, la vanne d'alimentation (28) étant commandée mécaniquement par l'organe de sélection (24) pour interrompre l'alimentation en air comprimé du moteur (2) à l'issue du cycle d'entraînement, la vanne d'alimentation (28) comprenant un obturateur (40) mécaniquement déplaçable par l'organe de sélection (24) entre une position d'obturation et au moins une position d'ouverture pour permettre le passage d'air comprimé (voir par exemple US-A- 2988935).

L'invention s'applique en particulier aux machines pneumatiques de perçage utilisées dans la construction aéronautique.

La première étape du cycle est généralement une étape d'avance et de rotation simultanée de la broche, et la deuxième étape une étape de recul et de rotation simultanée de la broche.

Le dispositif de commande du fonctionnement de la machine permet d'arrêter automatiquement le fonctionnement d'une telle machine à l'issue de l'exécution d'un cycle.

Ainsi, lorsqu'un utilisateur a installé plusieurs de ces machines sur une grille de support et qu'il a déclenché leurs fonctionnements, les machines s'arrêtent automatiquement sans qu'il n'ait besoin d'intervenir spécifiquement sur chacune d'entre elles.

Ainsi, le bruit provoqué par les machines en fonctionnement est limité. De plus, la pollution produite par l'air chargé de lubrifiant qui s'échappe des moteurs de telles machines est également limitée.

Dans des machines du type précité, le dispositif de commande du fonctionnement comprend des éléments du circuit pneumatique dédiés à la commande de la fermeture de la vanne d'alimentation du moteur à l'issue de l'étape de recul du cycle.

On constate que la structure du dispositif de commande est, notamment en raison de ces éléments pneumatiques dédiés, relativement complexe et coûteuse.

Un but de l'invention est de résoudre ce problème en fournissant une machine du type précité qui soit de structure plus simple et de coût plus réduit.

A cet effet, l'invention a pour objet une machine du type précité, caractérisée en ce que l'obturateur est mécaniquement déplaçable par l'organe de sélection entre une première position d'ouverture, que l'obturateur occupe lorsque l'organe de sélection est dans sa première position, et une deuxième position d'ouverture, que l'obturateur occupe lorsque l'organe de sélection est dans sa deuxième position.

Selon des modes particuliers de réalisation, la machine peut comprendre l'une ou plusieurs des caractéristiques suivantes :
- l'obturateur est mobile par basculement,
- l'obturateur est articulé à l'organe de sélection,
- l'obturateur comprend une tige de déplacement munie d'une sphère d'articulation à l'organe de sélection,
- la broche s'étendant le long d'un axe de broche, le premier mode d'entraînement comprend l'entraînement en translation de la broche le long de son axe dans un premier sens d'avance, et le deuxième mode d'entraînement comprend l'entraînement en translation de la broche le long de son axe dans un deuxième sens de recul opposé au premier sens,
- la machine est portative et possède une masse inférieure à 15 kg.

L'invention sera mieux comprise à la lecture de la description qui va suivre, donnée uniquement à titre d'exemple, et faite en se référant aux dessins annexés, sur lesquels :
- la figure 1 est une vue schématique en perspective d'une machine selon l'invention, et
- les figures 2 à 4 sont des schémas illustrant le mécanisme d'entraînement et le dispositif de commande du fonctionnement de la machine de la figure 1.

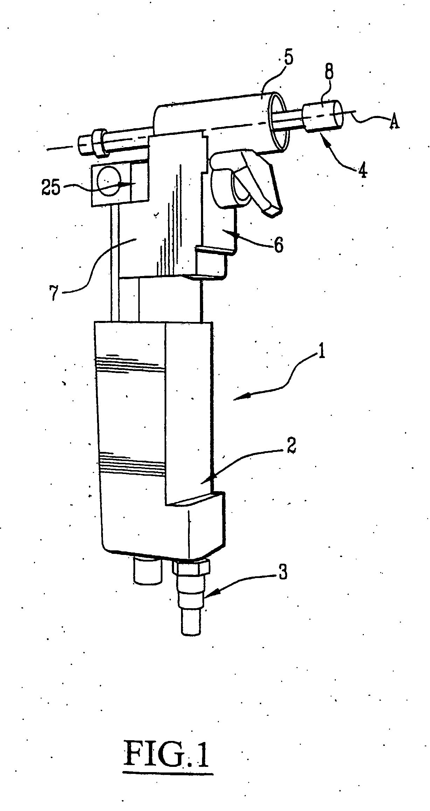

La figure 1 illustre schématiquement une machine pneumatique de perçage 1 portative qui comprend essentiellement :
- un moteur pneumatique classique 2 logé dans un carter,
- un raccord 3 de raccordement à une source d'air sous pression,
- une broche 4 porte-outils reçue dans un carter 5 pour être mobile en rotation le long de son axe A et en translation le long de cet axe A par rapport au carter 5, et
- un mécanisme 6 d'entraînement de la broche 4.

De manière classique, des outils de perçage peuvent être montés de manière amovible à l'extrémité avant 8 de la broche 4.

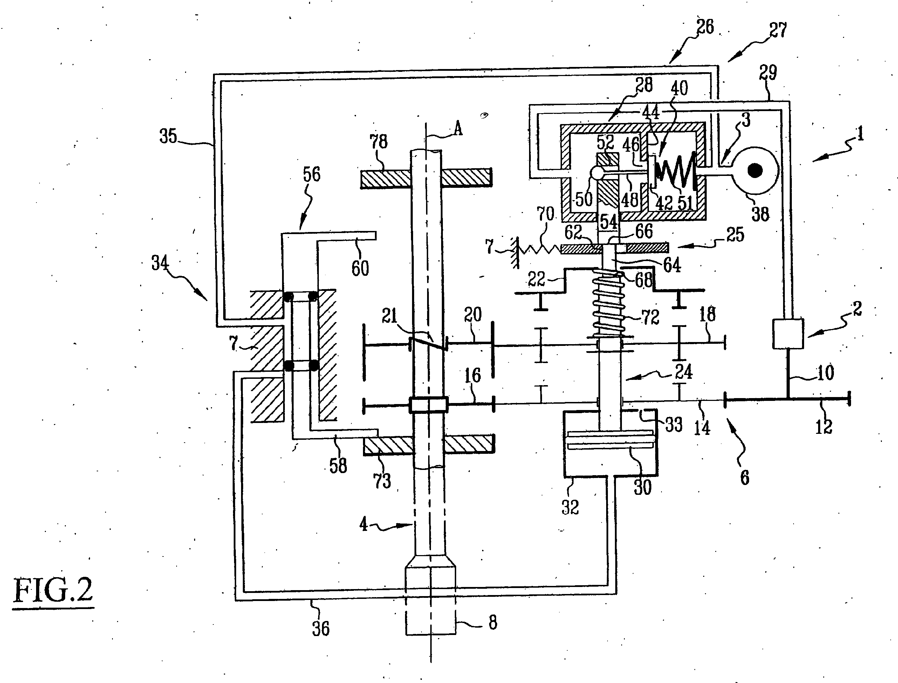

Le mécanisme d'entraînement 6 illustré par les figures 2 à 4 est un mécanisme classique généralement dénommé en français « mécanisme d'avance mécanique » et en anglais « positive feed drill ».

Dans la description qui suit, les termes « inférieur», « supérieur », « horizontal », « droite » et « gauche » s'entendent par rapport aux figures 2 à 4.

Le mécanisme 6 comprend essentiellement :
- un pignon 12 solidaire en rotation de l'arbre de sortie 10 du moteur 2,
- un premier pignon/crabot 14 engrenant avec le pignon 12,
- un pignon 16 engrenant avec le pignon/crabot 14 et solidaire en rotation de la broche 4, la broche 4 pouvant coulisser le long de son axe A par rapport à ce pignon 16,
- un deuxième pignon/crabot 18 surmontant le premier pignon/crabot 14,
- un pignon 20 qui surmonte le pignon 16, qui engrène avec le pignon/crabot 18 et qui est vissé sur un tronçon fileté 21 de la broche 4,
- un crabot fixe 22 surmontant le deuxième pignon/crabot 18, et
- une tige verticale de sélection 24.

Les pignons/crabots 14 et 18 sont montés rotatifs autour de la tige 24.

Le premier pignon/crabot 14 est fixe en translation par rapport au carter 7 du mécanisme 6.

La tige 24 peut coulisser verticalement dans le pignon/crabot 14 et par rapport au carter 7.

Le pignon/crabot 18 est lié en translation à la tige 24 le long de son axe vertical.

La machine 1 comprend en outre un organe 25 d'actionnement pour déclencher le fonctionnement de la machine et un dispositif 26 de commande de son fonctionnement. L'organe 25 est par exemple formé par un bouton, comme représenté sur la figure 1.

Le dispositif de commande 26 comprend essentiellement les éléments suivants :
- un circuit pneumatique 27 comprenant une vanne 28 d'alimentation du moteur 2 en air comprimé disposée dans une conduite 29 s'étendant entre le raccord 3 et le moteur 2,
- un piston 30 prévu à l'extrémité inférieure de la tige 24 et logé dans une chambre 32 comprenant un orifice 33 de mise à l'air dans sa paroi supérieure, et
- un capteur pneumatique de fins de courses 34.

Une conduite 35 du circuit pneumatique 27 est raccordée d'une part à la conduite 29 en amont de la vanne 28 et d'autre part au capteur 34. Une conduite 36 du circuit 27 raccorde le capteur 34 à la paroi inférieure de la chambre 32.

On notera que sur les figures 2 à 4 une source 38 d'air comprimé a été représentée raccordée au raccord 3.

La vanne 28 comprend un obturateur 40 qui comprend lui-même un disque 42 prenant appui sur un siège 44 percé d'un orifice 46, et une tige de déplacement 48 qui traverse l'orifice 46 et qui est terminée par une sphère 50 d'articulation. Un ressort 51 repousse le disque 42 contre le siège 44.

La sphère 50 est reçue dans un passage horizontal 52 ménagé à l'extrémité supérieure 54 de la tige 24.

Le capteur de fins de courses 34 comprend un tiroir vertical 56 prolongé latéralement à son extrémité inférieure par une patte de déplacement 58 et à son extrémité supérieure par une patte de déplacement 60.

L'organe d'actionnement 25 présente un passage 62 dans lequel un tronçon intermédiaire 64 de diamètre réduit de la tige de sélection 24 est reçu. Ce tronçon 64 est délimité par un épaulement supérieur 66 et par un épaulement inférieur 68. Le tronçon 64 est de hauteur nettement supérieure à l'épaisseur de l'organe d'actionnement 25. Un ressort 70 rappelle l'organe d'actionnement 25 vers la droite de sorte qu'il s'appuie par le fond du passage 62 sur le tronçon 64.

En outre, un ressort 72 prend appui sur le crabot 22, et donc sur le carter 7, ainsi que sur le pignon/crabot 18 pour solliciter la tige de sélection 24 en translation vers le bas.

Lorsque la machine 1 est à l'arrêt comme représenté sur la figure 2, le déplacement vers le bas de la tige de sélection 24 est empêché par le fait que l'épaulement 66 est en butée sur l'organe d'actionnement 25.

Sur la figure 2, l'obturateur 40 est dans une position d'obturation de l'orifice 46 où il s'appuie par tout son pourtour sur le siège 44. Le moteur 2 n'est alors pas alimenté en air sous pression. La tige de sélection 24 est alors dans une position intermédiaire de repos ou de point mort. Le pignon/crabot 18 est dans une position intermédiaire où il est espacé du pignon/crabot 14 et du pignon/crabot 22. Le piston 30 occupe également une position intermédiaire entre les parois inférieure et supérieure de la chambre 32. La broche 4 est immobile et occupe une position reculée de fin de course où une butée inférieure 73 solidaire de la broche 4 prend appui sur la patte inférieure de déplacement 58 du tiroir 56.

En outre, le tiroir 56 isole les conduites 35 et 36, et isole donc la chambre 32 de la source 38. Le tiroir 56 met à l'air la conduite 36.

Lorsqu'un utilisateur souhaite déclencher l'exécution d'un cycle de perçage, il déplace manuellement l'organe d'actionnement 25 vers la gauche en comprimant le ressort 70. Ce déplacement se poursuit jusqu'à ce que l'épaulement 66 ne prenne plus appui sur l'organe d'actionnement 25.

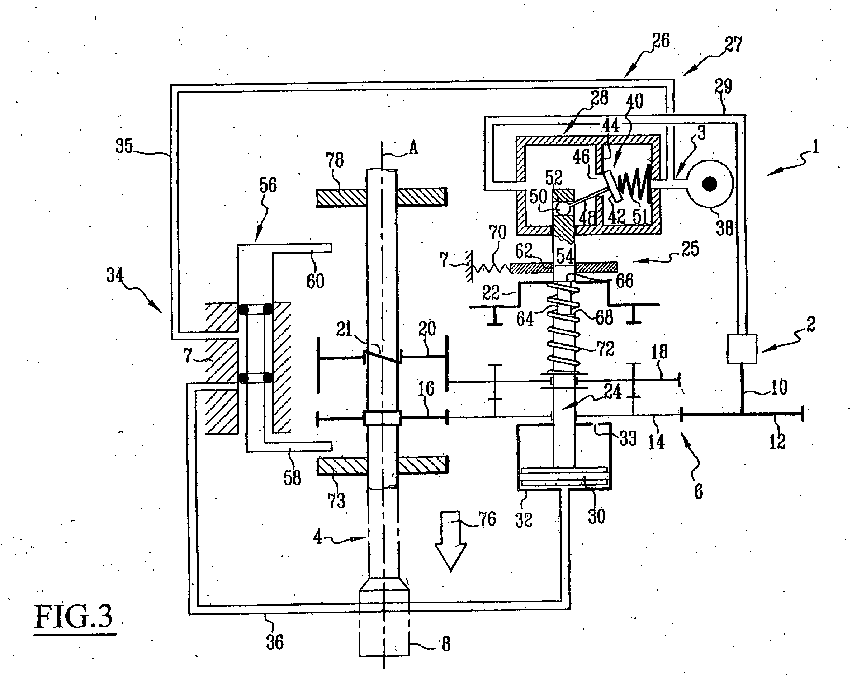

La tige de sélection 24 est alors libérée et repoussée vers le bas par le ressort 72. Ce mouvement de descente de la tige 24 se poursuit jusqu'à ce que le pignon/crabot 18 vienne craboter avec le pignon/crabot 14 (figure 3).

La tige de sélection 24 est alors dans une première position extrême inférieure tout comme le pignon/crabot 18.

Au cours de ce mouvement de descente de la tige 24, le piston 30 se déplace vers la paroi inférieure de la chambre 32. L'extrémité supérieure 54 de la tige 24 se déplace également vers le bas en provoquant, via la sphère 50 et la tige 48, le basculement de l'obturateur 40 de la vanne 28 dans le sens anti-horaire, comme illustré par la figure 3.

L'obturateur 40 est alors dans une première position d'ouverture où il libère l'orifice 46 et ne prend appui sur le siège 44 que par un tronçon supérieur de son pourtour.

L'air de la source 38 peut alors s'écouler au travers de l'orifice 46 du siège 44 de la vanne 28 et alimenter via la conduite 29 le moteur 2. Le moteur 2 entraîne alors la broche 4 en rotation autour de son axe A via les pignons 12, 14 et 16.

Les pignons/crabots 14 et 18 étant crabotés, ils sont solidaires en rotation. Le pignon 20 est alors entraîné en rotation par le pignon/crabot 18. Grâce à un choix approprié du nombre de dents des pignons 18 et 20 , le pignon 20 tourne légèrement plus vite que le pignon 16 comme cela est classique. Grâce à ce différentiel de vitesse, la broche 4 est entraînée en translation le long de son axe A vers le bas ce qui correspond à un mouvement d'avance. Ce mouvement est schématisé par la flèche 76 sur la figure 3.

Au cours de ce mouvement d'avance, une butée supérieure 78 solidaire de la broche 4 prend appui sur la patte supérieure 60 du tiroir 56. La broche 4 entraîne alors dans son mouvement le tiroir 56 qui coulisse par rapport au carter 7.

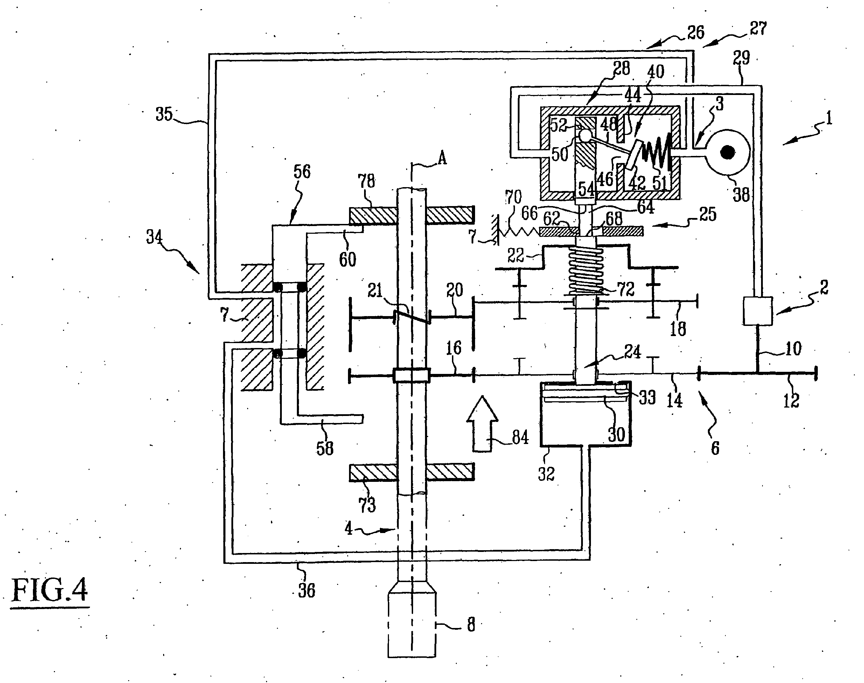

Lorsque la broche 4 atteint une position avancée de fin de course (figure 4), le tiroir 56 s'est suffisamment déplacé pour mettre en communication les conduites 35 et 36 et alimenter en air sous pression la région inférieure de la chambre 32. De l'air sous pression vient alors repousser le piston 30 et donc la tige de sélection 24 vers le haut, à l'encontre de la force de rappel exercée par le ressort 72.

Ce mouvement de remontée de la tige 24 se poursuit jusqu'à ce que le piston 30 soit en appui contre la paroi supérieure de la chambre 32 (figure 4). La tige 24 est alors dans une deuxième position extrême supérieure, tout comme le pignon/crabot 18 qui est craboté avec le crabot 22. Au cours de ce mouvement de remontée, l'extrémité supérieure 54 de la tige 24 provoque le basculement de l'obturateur 40 dans le sens horaire sur la figure 4 au-delà de sa position d'obturation et jusqu'à une deuxième position d'ouverture. Dans sa deuxième position d'ouverture l'obturateur 40 libère l'orifice 46. Il ne prend alors appui sur le siège 44 que par un tronçon inférieur de son pourtour.

Au cours de ce mouvement de remontée de la tige 24, le ressort 70 repousse l'organe d'actionnement 25 vers la droite jusqu'à ce que le fond du passage 62 prenne à nouveau appui contre le tronçon intermédiaire 64 de la tige 24. A l'issue du mouvement de remontée de la tige 24, l'épaulement inférieur 68 de la tige 24 prend appui sur l'organe d'actionnement 25.

Le pignon/crabot 18 étant craboté avec le pignon supérieur 22 qui est fixe en rotation, le pignon/crabot 18 et le pignon 20 sont également fixes en rotation.

Les pignons 14 et 16 continuant quant à eux à tourner comme décrit précédemment, la broche 4 amorce un mouvement de translation le long de son axe A vers le haut, dénommé mouvement de recul, comme illustré par la flèche 84 sur la figure 4.

Au cours de ce mouvement de recul, la butée inférieure 73 de la broche 4 vient prendre appui sur la patte inférieure de déplacement 58 du tiroir 56 et provoque ainsi la translation vers le haut du tiroir 56 par rapport au carter 7.

Le mouvement de recul se poursuit jusqu'à ce que la broche 4 reprenne sa position reculée de fin de course de la figure 2. Le tiroir 56 interrompt alors à nouveau la communication entre les conduites 35 et 36 et met à l'air la conduite 36. Le piston 30 n'est plus alors soumis à l'action de l'air comprimé et le ressort 72 rappelle la tige 24 vers le bas jusqu'à ce que l'épaulement 66 de l'arbre 24 prenne appui sur l'organe d'actionnement 25. La tige de sélection 24 a alors repris sa position de repos de la figure 2 et l'obturateur 40 sa position d'obturation. Le moteur 2 n'est donc plus alimenté en air comprimé et le fonctionnement de la machine 1 est donc arrêté.

Ainsi, la machine des figures 1 à 4 possède un dispositif 26 de commande de son fonctionnement permettant de commander l'exécution d'un cycle comprenant une première étape où la broche est animée simultanément d'un mouvement de rotation et d'avance puis d'une deuxième étape où la broche 4 est animée simultanément d'un mouvement de recul et de rotation, et à l'issue de ce cycle de commander automatiquement l'arrêt de la machine 1.

L'interruption de l'alimentation du moteur 2 en fin de cycle est assurée grâce à une vanne 28 qui est commandée mécaniquement par l'organe de sélection 24 habituellement présent dans ce type de machine. Ainsi, on s'affranchit des éléments pneumatiques complexes utilisés jusqu'à présent pour interrompre l'alimentation du moteur 2.

La structure du dispositif de commande 26 est donc relativement simple et d'encombrement réduit.

De plus, le coût du dispositif de commande 26 est réduit grâce au fait qu'il utilise une commande mécanique plutôt que pneumatique, et en outre grâce au fait que cette commande mécanique est assurée par un organe 24 habituellement présent dans le mécanisme d'entraînement 6.

Bien que les principes ci-dessus aient été décrits en relation avec une machine portative, c'est-à-dire d'une masse inférieure à environ 15 kg, ils peuvent s'appliquer à une machine non-portative.

En outre, ils pourraient s'appliquer également à une machine dédiée à un autre type d'usinage que le perçage.

Ainsi, le cycle dont le dispositif de commande 26 assure l'exécution peut comprendre des étapes différentes de celles décrites précédemment et en particulier plus de deux étapes où les modes d'entraînement sont distincts.

## Revendications

1. Machine d'usinage (1) comprenant :
- un moteur pneumatique (2),
- un circuit pneumatique (27) de raccordement du moteur (2) à une source (38) d'air comprimé, ce circuit pneumatique comprenant une vanne (28) d'alimentation du moteur,
- une broche porte-outils (4),
- un mécanisme d'entraînement (6) reliant mécaniquement le moteur (2) à la broche pour l'entraîner, le mécanisme comprenant un organe de sélection (24) mobile entre une première position de sélection d'un premier mode d'entraînement de la broche (4), et une deuxième position de sélection d'un deuxième mode d'entraînement de la broche (4) différent du premier mode d'entraînement, et
- un dispositif (26) de commande du fonctionnement de la machine pour commander l'exécution d'un cycle d'entraînement comprenant au moins une étape d'entraînement de la broche (4) selon le premier mode d'entraînement, puis une étape d'entraînement de la broche (4) selon le deuxième mode d'entraînement, puis commander l'arrêt de l'alimentation en air du moteur (2),
la vanne d'alimentation (28) étant commandée mécaniquement par l'organe de sélection (24) pour interrompre l'alimentation en air comprimé du moteur (2) à l'issue du cycle d'entraînement, la vanne d'alimentation (28) comprenant un obturateur (40) mécaniquement déplaçable part l'organe de sélection (24) entre une position d'obturation et au moins une position d'ouverture pour permettre le passage d'air comprimé, **caractérisée en ce que** l'obturateur (40) est mécaniquement déplaçable par l'organe de sélection (24) entre une première position d'ouverture, que l'obturateur occupe lorsque l'organe de sélection (24) est dans sa première position, et une deuxième position d'ouverture, que l'obturateur occupe lorsque l'organe de sélection (24) est dans sa deuxième position.

2. Machine selon la revendication 1, **caractérisée en ce que** l'obturateur (40) est mobile par basculement.

3. Machine selon la revendication 2, **caractérisée en ce que** l'obturateur (40) est articulé à l'organe de sélection (24).

4. Machine selon la revendication 3, **caractérisée en ce que** l'obturateur comprend une tige de déplacement (46) munie d'une sphère d'articulation à l'organe de sélection (24).

5. Machine selon l'une des revendications précédentes, **caractérisée en ce que**, la broche s'étendant le long d'un axe de broche, (A), le premier mode d'entraînement comprend l'entraînement en translation de la broche le long de son axe (A) dans un premier sens d'avance, et **en ce que** le deuxième mode d'entraînement comprend l'entraînement en translation de la broche le long de son axe (A) dans un deuxième sens due recul opposé au premier sens.

6. Machine selon la revendication 5, **caractérisée en ce que** le mécanisme d'entraînement comprend :
- un premier pignon/crabot (14),
- un pignon (16) d'entraînement en rotation de la broche, lequel pignon engrène avec le premier pignon/crabot (14) et est solidaire en rotation de la broche (4), la broche (4) pouvant coulisser le long de son axe (A) par rapport au premier pignon,
- une deuxième pignon/crabot (18) surmontant le premier pignon/crabot (14), et
- un pignon (20) d'entraînement en translation de la broche (4), qui surmonte le pignon (76) d'entraînement en rotation de la broche , qui engrène avec le deuxième pignon/crabot (16) et qui est vissé sur un tronçon fileté de la broche (4).

7. Machine selon l'une des revendications précédentes, **caractérisée en ce qu'**elle est portative et possède une masse inférieure à 15 kg.

## Claims

1. Machine (1) for machining purposes, comprising:
- a pneumatic motor (2);
- a pneumatic circuit (27) for connecting the motor (2) to a compressed air source (38), the said pneumatic circuit comprising a valve (28) for feeding the motor;
- a tool-carrying spindle (4);
- a driving mechanism (6) for mechanically connecting the motor (2) to the spindle in order to drive it, said mechanism comprising a selecting component (24) which can be moved between a first position for selecting a first mode for driving the spindle (4), and a second position for selecting a second mode for driving the spindle (4) which differs from the first driving mode; and
- a device (26) for controlling the functioning of the machine in order to control the carrying-out of a driving cycle comprising at least one stage for driving the spindle (4) in accordance with the first driving mode, and then a stage for driving said spindle (4) in accordance with the second driving mode, and then to control the stopping of the air feed to the motor (2);
- the feed valve (28) being controlled mechanically by the selecting component (24) in order to interrupt the compressed air feed to the motor (2) at the end of the driving cycle, and the feed valve (28) comprising a shutting-off device (40) which can be mechanically displaced by the selecting component (24) between a shutting-off position and at least one opening position in order to allow the passage of compressed air;
- **characterised in that** the shutting-off device (40) can be mechanically displaced by the selecting component (24) between a first opening position, which the shutting-off device occupies when the selecting component (24) is in its first position, and a second opening position, which the shutting-off device occupies when the selecting component (24) is in its second position.

2. Machine according to claim 1, **characterised in that** the shutting-off device (40) can be moved by tilting.

3. Machine according to claim 2, **characterised in that** the shutting-off device (40) is articulated on the selecting component (24).

4. Machine according to claim 3, **characterised in that** the shutting-off device comprises a displacing rod (46) which is provided with a sphere for articulation on the selecting component (24).

5. Machine according to one of the preceding claims, **characterised in that**, since the spindle extends along a spindle axis (A), the first driving mode comprises the driving of the spindle in translation along its axis (A) in a first direction of advance, and **in that** the second driving mode comprises the driving of the spindle in translation along its axis (A) in a second, backward direction which is opposed to the first direction.

6. Machine according to claim 5, **characterised in that** the driving mechanism comprises:
- a first pinion/dog clutch (14);
- a pinion (16) for driving the spindle in rotation, which pinion meshes with the first pinion/dog clutch (14) and is integral in rotation with the spindle (4), said spindle (4) being capable of sliding along its axis (A) in relation to the first pinion;
- a second pinion/dog clutch (18) surmounting the first pinion/dog clutch (14); and
- a pinion (20) for driving the spindle (4) in translation, which surmounts the pinion (76) for driving the spindle in rotation, which meshes with the second pinion/dog clutch (16) and which is screwed onto a threaded length of the spindle (4).

7. Machine according to one of the preceding claims, **characterised in that** it is portable and possesses a mass of less than 15 kg.

## Patentansprüche

1. Bearbeitungsmaschine (1), die Folgendes umfasst:
- einen Pneumatikmotor (2),
- einen Pneumatikkreis (27) zum Anschließen des Motors (2) an eine Druckluftquelle (38), wobei dieser Pneumatikkreis ein Ventil (28) zum Speisen des Motors umfasst,
- eine Werkzeughalterspindel (4),
- ein Antriebsaggregat (6), das den Motor (2) mechanisch mit der Spindel verbindet, um sie anzutreiben, wobei das Aggregat ein Auswahlglied (24) umfasst, das zwischen einer ersten Position des Auswählens eines ersten Antriebsmodus der Spindel (4) und einer zweiten Position des Auswählens eines zweiten Antriebsmodus der Spindel (4) beweglich ist, der sich vom ersten Antriebsmodus unterscheidet, und
- eine Vorrichtung (26) zum Steuern des Betriebs der Maschine zum Steuern der Ausführung eines Antriebszyklus, der wenigstens eine Antriebsstufe der Spindel (4) gemäß einem ersten Antriebsmodus, dann eine Antriebsstufe der Spindel (4) gemäß dem zweiten Antriebsmodus, dann das Steuern des Stoppens der Zufuhr von Luft zum Motor (2) beinhaltet,
wobei das Speiseventil (28) durch das Auswahlglied (24) zum Unterbrechen der Druckluftzufuhr zum Motor (2) nach dem Antriebszyklus mechanisch gesteuert wird, wobei das Zufuhrventil (28) einen Verschluss (40) umfasst, der von dem Auswahlglied (24) zwischen einer Verschlussposition und wenigstens einer Öffnungsposition mechanisch bewegt werden kann, um die Passage von Druckluft zuzulassen, **dadurch gekennzeichnet, dass** der Verschluss (40) von dem Auswahlglied (24) zwischen einer ersten Öffnungsposition, die der Verschluss einnimmt, wenn des Auswahlglied (24) in seiner ersten Position ist, und einer zweiten Öffnungsposition mechanisch bewegt werden kann, die der Verschluss einnimmt, wenn das Auswahlglied (24) in seiner zweiten Position ist.

2. Maschine nach Anspruch 1, **dadurch gekennzeichnet, dass** der Verschluss (40) durch Kippen beweglich ist.

3. Maschine nach Anspruch 1, **dadurch gekennzeichnet, dass** der Verschluss (40) an das Auswahlglied (24) angelenkt ist.

4. Maschine nach Anspruch 3, **dadurch gekennzeichnet, dass** der Verschluss einen beweglichen Stab (46) umfasst, der mit einer Gelenkkugel an dem Auswahlglied (24) versehen ist.

5. Maschine nach einem der vorherigen Ansprüche, **dadurch gekennzeichnet, dass** die Spindel entlang einer Spindelachse (A) verläuft, der erste Antriebsmodus einen Translationsantrieb der Spindel entlang ihrer Achse (A) in einer ersten Vorschubrichtung beinhaltet, und dadurch, dass der zweite Antriebsmodus einen Translationsantrieb der Spindel entlang ihrer Achse (A) in einer zweiten, der ersten Richtung entgegengesetzten Rückkehrrichtung beinhaltet.

6. Maschine nach Anspruch 5, **dadurch gekennzeichnet, dass** der Antriebsmechanismus Folgendes umfasst:
- ein(e) erste(s) Ritzel/Klaue (14),
- ein Ritzel (16), um die Spindel in Drehung zu versetzen, wobei das genannte Ritzel mit dem/der ersten Ritzel/Klaue (14) im Eingriff und rotationsfest mit der Spindel (4) verbunden ist, wobei die Spindel (4) entlang ihrer Achse (A) in Bezug auf das erste Ritzel gleiten kann,
- ein(e) zweite(s) Ritzel/Klaue (18) über dem/der zweiten Ritzel/Klaue (18) und
- ein Ritzel (20), um die Spindel (4) in Translation zu versetzen, das sich über dem Ritzel (76) zum In-Drehung-Versetzen der Spindel befindet, das mit dem/der zweiten Ritzel/Klaue (16) im Eingriff und auf einen Gewindeabschnitt der Spindel (4) geschraubt ist.

7. Maschine nach einem der vorherigen Ansprüche, **dadurch gekennzeichnet, dass** sie tragbar ist und ein Gewicht von weniger als 15 kg hat.
